# EUROPEAN PATENT SPECIFICATION

(11) **EP 1 760 896 B1**
(45) Date of publication and mention of the grant of the patent: **29.09.2010**
(21) Application number: 05018728.5
(22) Date of filing: 29.08.2005
(51) Int. Cl.: H04B 1/38

(54) **Product for carrying audio and telephonic communication devices**
Vorrichtung zum Tragen von Audio- und Telefoneinrichtungen
Produit pour transporter des dispositifs audio et téléphoniques

(43) Date of publication of application: 07.03.2007
(73) Proprietor: Skullcandy, Inc., Park City, UT 84098 (US)
(72) Inventor: Alden, Richard P., Park City, Utah 841098 (US)
(74) Representative: Schröer, Gernot H.

(56) References cited:
- WO-A-03/099061
- WO-A-2004/025829
- WO-A-2004/107141
- GB-A- 2 365 692
- US-A1- 2001 050 991

## Description

### BACKGROUND OF THE INVENTION

### 1. The Field of the Invention

This invention relates to an integrated article of manufacture having one or more apparatus embedded therein for integrating a two-way communication device and an audio delivery device.

### 2. The Background Art

The use of mobile telephones and other wireless communication devices has increased dramatically in recent years. Likewise, electronic music players, such as MP3, CD, DVD, and like players have proliferated. Some companies have attempted to integrate music players and mobile two-way communication devices into single devices. While integration may reduce the number of devices a user is required to carry, a user may unnecessarily discard devices that are still fully functional, incurring unnecessary expense.

With respect to music players and mobile phones, various conflicts may arise when attempting to operate independent devices simultaneously. For example, users may listen to portable music players while exercising, traveling, working, relaxing, and performing like activities. However, users may desire to simultaneously place and receive phone calls, activities that may be inherently difficult to perform while listening to music or other audio material. For example, a user may be unable to hear a phone ring while listening to music using headphones, earphones, or the like. Moreover, if a user is able to accept a call, the user may be required to remove headphones, reduce the volume of or mute a music player, pick up a mobile phone handset, or like actions, in order to accept or place a call. This may be an excessively clumsy process.

US 2001/0050991 A1 discloses a portable personal audio system integrated in a jacket and comprising an MP3 player as a first audio signal source device and a telephone as a second audio signal source device. These devices are connected via respective leads, i.e. by wires, to a control and switching stage arranged in the sleeve of the jacket for easy handling by the user, and from there to left and right earphones, as audio output devices. The switching stage needs actuation or manual selection by the user and depending on such manual selection switches through the stereo signal of the MP3 player to both earphones, when no phone call is present, or, if a phone call comes in and the user actuates the switching stage accordingly, the switching stage switches the phone signal through to one of the earphones and switches through the audio MP3 signal to the other earphone or switches off the music signal completely.

What is needed is apparatus and methods for users to simultaneously accept and place phone calls using a mobile phone or other two-communication device while listening to music, or other audio material using an independent audio delivery device.

What is further needed is apparatus and methods to integrate the services of substantially any arbitrary two-way communication device with substantially any arbitrary music or audio delivery device.

### SUMMARY OF THE INVENTION

An integrated article according to the invention is claimed in claim 1.

Embodiments of the present invention include apparatus for integrating two-way communication devices with audio delivery devices, and within one or more articles of manufacture, such as a jacket, backpack, helmet, or the like. An apparatus in accordance with the invention may include a first electrical connector connected to receive a first audio signal from a substantially arbitrarily selectable audio delivery device, such as an MP3, CD, DVD, radio, or other media player. A second electrical connector may be connected to receive a second audio signal from a substantially arbitrarily selectable two-way communication device, such as a mobile phone, or a two-way radio such as a walkie talkie, citizen band radio (e.g. CB), HAM radio, marine and aviation radio, and the like.

A coupling device independent from the audio and two-wary communication devices is connected to receive the first and second audio signals. A third audio signal comprising at least one of the first and second audio signals may be transmitted from the coupling device to an acoustic device, such as headphones, earphones, speakers, or the like to convert the third audio signal to an acoustic wave having an audio range corresponding to a hearing range of a user.

A mixer is connected to the apparatus to mix the first and second audio signals to create the third audio signal. In certain embodiments, a switch may be connected to the apparatus to enable a user to selectively switch between the first and second audio signals to provide the third audio signal to the acoustic device.

The coupling device is further divided into a pair of coupling components that wirelessly communicate with one another over the third interface, wherein a first coupling component of the pair of coupling components includes the first interface and the second interface and a transceiver receptive to the audio signals from the audio delivery device and the two-way communication device and a second coupling component of the pair of coupling components includes a transceiver which wirelessly communicates with the transceiver of the first coupling component for passing one or more audio signals from the coupling device and any one or more of the audio delivery device, the two-way communication device, and the acoustic device, and the second coupling component further contains at least one of a microphone for transmitting a voice signal to the two-way communication device, a switch for selectively switching between the first and second audio signals to provide the third audio signal, the mixer for mixing the first and second audio signals to create the third audio signal, and a volume controller for selectively controlling the volume of at least one of the first and second audio signals.

In selected embodiments, the apparatus includes a microphone connected to transmit a voice signal of a user to the two-way communication device. Thus, the two-way communication device may be located away from the face of the user. The apparatus may also include a volume controller connected to selectively control the volume of at least one of the first and second audio signals. In certain embodiments, the volume controller may control the first audio signal (e.g. the audio signal originating atom the audio delivery device) so that a user may selectively raise or lower the volume of the music of other media while receiving or placing a call.

In selected embodiments, the apparatus may employ, in addition, electrical wiring to route the audio signals and the voice signal to and from the coupling device. A switch, selectively operable by a user, may be used to connect at least two of the second audio signal wire, the voice signal wire, and a ground wire, to activate a function of the two-way communication, device. For example, if the two-way communication device is a mobile phone, the switch may be used to trigger a function of the mobile phone such as a mute command, a call connect command, a call disconnect command, voice-activated dialing, a command to call the last number dialed, and the like.

The coupling device may contain any or all of the hardware previously described including but not limited to the microphone, the switches, the mixer, and the volume controller. In selected embodiments, the audio signal from the two-way communication device may be characterized by a threshold value. The second audio signal may be accorded priority relative to the first audio signal originating from the audio delivery device. Thus, the second audio signal may interrupt the first audio signal upon reaching the threshold value,

An article of manufacture, such as a jacket, backpack, helmet, or the like, can then be configured to receive the two-way communication device, the audio delivery device, the coupling device, one or more wires (as appropriate), and one or more headphones, earphones, speakers. One or more of the two-way communication device, the audio delivery device, and the one or headphones, earphones, or speakers communicate with each other through the coupling device using wireless communication means, These can also communicate via a combination of wired and wireless communication means.

### BRIEF DESCRIPTION OF THE DRAWINGS

The objects and features of the present invention will become more fully apparent from the following description, taken in conjunction with the accompanying drawings. Understanding that these drawings depict only typical embodiments of the invention and are, therefore, not to be considered limiting of its scope, the invention will be described with additional specificity and detail through use of the accompanying drawings in which:
FIG. 1 is a plan view of one embodiment of a personal portable integrator usable with a music player and a mobile phone;
FIG. 2 is a plan view of one embodiment of a personal portable integrator having a device-specific link to a two-way communication device;
FIG. 3 is a schematic block diagram illustrating one embodiment of connectors that may be used to adapt the invention to a wide variety of devices;
FIG. 4 is a schematic block diagram of one embodiment of an adapter that may be used to interface to a specific device;
FIG. 5 is a schematic block diagram of one embodiment of components contained within a coupling device in accordance with the invention;
FIG. 6 is a schematic block diagram of an alternative embodiment of components contained within a coupling device in accordance with the invention;
FIG. 7 is a schematic block diagram of another alternative embodiment of components contained within a coupling device in accordance with the invention;
FIG. 8 is a schematic block diagram of one embodiment of a personal portable integrator usable with a music player and a mobile phone using wireless technology;
FIG. 9A illustrates one implementation of an article of manufacture that is configured to integrate a music player and a mobile phone using wired or wireless technology; and
FIG. 9B illustrates another implementation of an article of manufacture that is configured to integrate a music player and a mobile phone using wired or wireless technology.

### DETAILED DESCRIPTION OF THE PREFERRED EMBODIMENTS

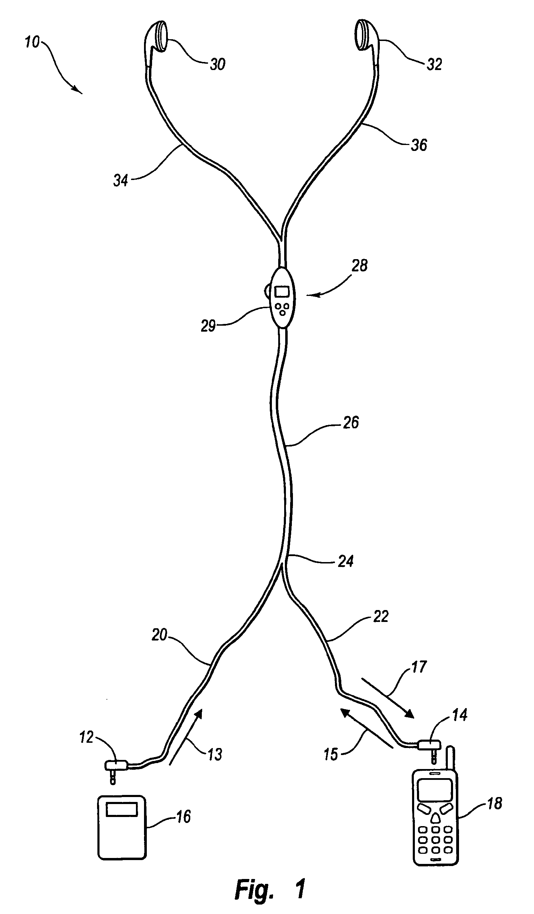

It will be readily understood that the components of the present invention, as generally described and illustrated in FIGS. 1 through 8 herein, could be arranged and designed in a wide variety of different configurations. Thus, the description herein is not intended to limit the scope of the invention, but is merely representative of certain presently preferred embodiments of devices and systems in accordance with the invention. Those of ordinary skill in the art will, of course, appreciate that various modifications to the details herein may easily be made without departing from the essential characteristics of the invention, as described. Thus, the following information is intended only by way of example, and simply illustrates certain presently preferred embodiments consistent with the invention.

Referring to FIG. 1, a portable integrator 10 for use with a two-communication device 18, such as a mobile phone 18, and an audio delivery device 16, such as a portable MP3 player or CD player, may include electrical connectors 12, 14 to interface with the devices 16, 18. The electrical connectors 12, 14 may vary according to the device. For example, an audio device 16 may require a jack 12 having specific dimensions and with a specified number of contact points. Likewise, a connector 14 may connect to a particular communication device 18. The connectors 12, 14 may be modified as needed to adapt to other devices 16, 18.

The connectors 12, 14 may be adapted to receive and provide signals 13, 15, 17 from the devices 16, 18. For example, the connector 12 may simply receive an audio signal 13 from the audio device 16. The signal 13 may be a monophonic, stereophonic, or like representation of an audio signal 13. Likewise, the connector 14 may receive an audio signal 15 from the communication device 18. In addition, the connector 14 may provide a voice signal 17, or other input signal 17, to the communication device 18 from a user thereof or other outside source.

Sheathed flexible wires 20, 22 or other transmission means such as optical fibers 20,22, or wireless technology such as Bluetooth may be used to carry the signals 13, 15, 17 to and from the devices 16, 18. In certain embodiments, a reinforcement member 24 may be used to provide strength at a junction point 24 of the lines 20, 22. The reinforcement member 24 may also be used to form a transition point 24 where wires 20, 22 may be bundled together beneath a single protective sheathing 26.

A coupling device 28 may receive and transmit the signals 13, 15, 17 through the path 26. The coupling device 28 may act as a controller 28 or hub 28 to route the signals 13, 15, 17 to an acoustic device 30, 32, such as headphones 30, 32, earphones 30, 32, speakers 30, 32, or the like. The coupling device 28 may also contain a microphone 29, thus providing a hands free set 29, 30, 32, usable with a mobile phone 18. A pair of wires 34, 36 or other communication paths 34, 36 may connect the coupling device 28 to the acoustic device 30, 32.

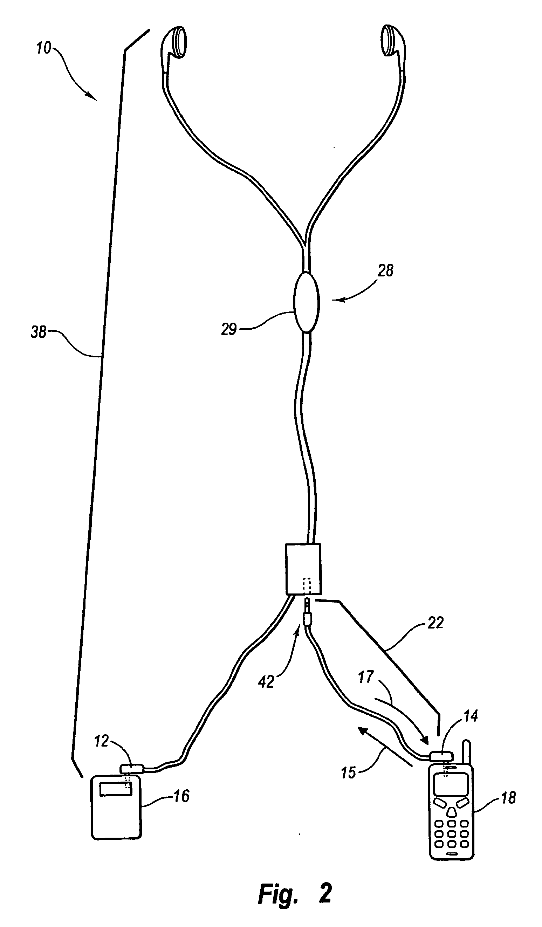

Referring to FIG. 2, as was previously mentioned, devices 16, 18, such as mobile phones 18, may not use a standardized jack 12, 14. However, it may be undesirable to provide a separate integrator device 10 for each variation of devices 12, 14 that may be available. Therefore, in certain embodiments, a portion 38 of the portable integrator 10 may be provided as a universal component 38 while another portion 40 may serve as a device-specific component 40. For example, audio devices 16 may use a standardized connector 12 or jack 12.

Therefore, a universal component 38 may adapt to the vast majority of audio devices 16 that may be available. Conversely, many two-way communication devices 18, such as mobile phones 18 may not have standardized connections 14. Therefore, device-specific components 40 may be provided having a standard connection 42 that may interface with the universal component 38, while another adapter 14 or connector 14 may be specific to the device 18.

In cases where devices 18 may have a varying number of inputs 17 and outputs 15, dead pins, wires (communication paths), and the like may by used as needed to increase or decrease the number of inputs 15 or outputs 17 according to specific devices 18. In addition, a user may only desire to use a single device 16 for a given period of time and may wish to remove the portion 40 until it is needed.

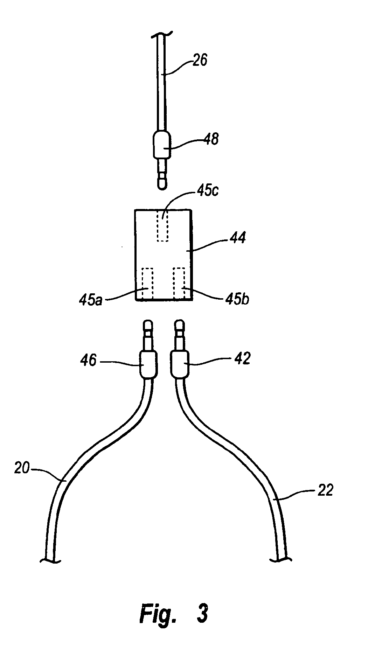

Referring to FIG. 3, while continuing to refer generally to FIGS. 1 and 2, adaptability of the integrator device 10 may be provided in various ways. For example, in certain embodiments, the integrator device 10 may include an adapter 44 that may provide an interface 44 to each of the devices 12, 18, 28, specifically through one or more individual interfaces 45a, 45b, and 45c. In selected embodiments, a connection 20 to an audio device 16 may be swapped at interface 45a with another connection 20 fitted for another device, a connection 22 to a communication device 18 may be swapped at interface 45b with another connection 22 fitted for another communication device 18, a coupling device 28 and an acoustic device 30, 32 may be swapped at interface 45c with other devices 28, 30, 32, and the like. As was previously mentioned, certain portions 26, 20, 22 may be added or deleted as needed by the user. The adapter 44 may use a variety of connectors 42, 46, 48 to connect to the adapter 44, and may also be configured to communicate wirelessly through each of interfaces 45a, 45b, and 45c. In particular, in certain embodiments, the adapter 44 may wirelessly communicate with each of the devices 16, 18 using a wireless technology, thereby acting as a wireless communication hub 44.

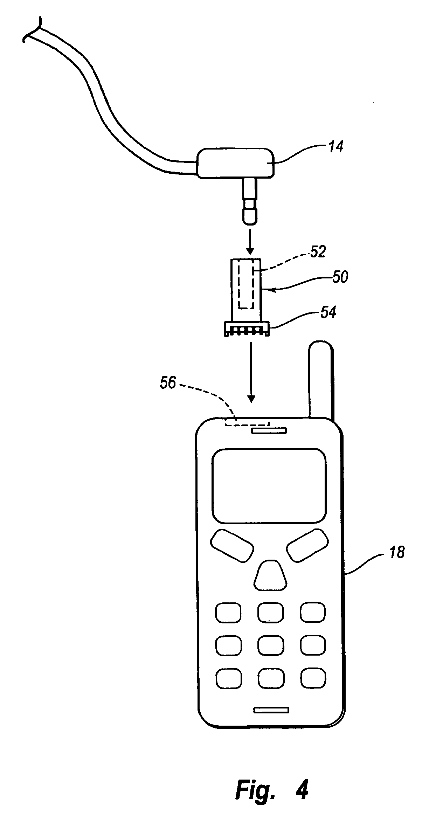

Referring to FIG. 4, in selected embodiments, adapters 50 may be provided in accordance with the invention to adapt a portable integrator 10 to specific devices 18. For example, an adapter 50 may include an interface 52 for interfacing with a connector 14. Likewise, the adapter 50 may include another interface 54 that may connect directly to a device 18 at an input 56. In addition, other features may be built into the adapter 50 such as impedance matching, signal amplification, and the like.

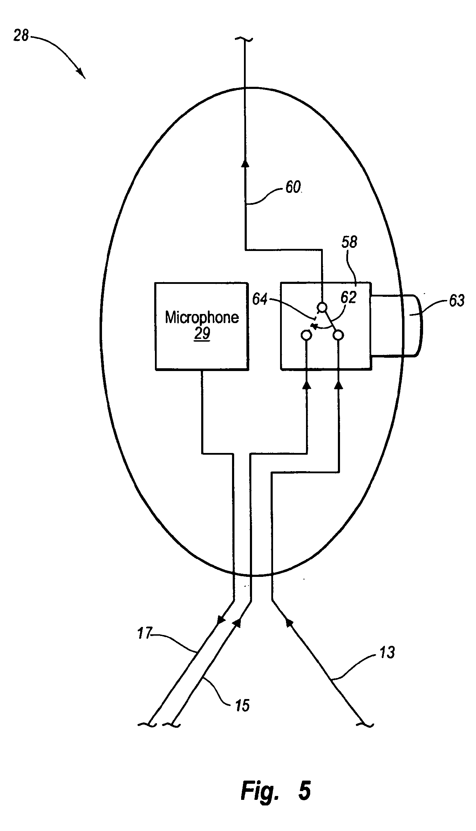

Referring to FIG. 5, in certain embodiments, the coupling device 28 may include a switch 58 to selectively enable a user to connect one of the signals 13, 15 through to the output 60. For example, a user may listen to an audio recording or live transmission from an audio device 16 with the switch 58 in a first position 62. If the user receives or desires to place a call, the switch 58 may be changed to a second position 64 to connect the communication device 18 through to the output 60. The switch 58 may include a button 63 or like mechanism 63 to enable a user operation thereof. Thus, the signal 13 from the audio device 16 may be conveniently and selectively disconnected while the user operates the communication device 18. In this way, simple operation of a switch 58 may enable a user to operate an audio delivery device 16 and a communication device 18 through a single acoustic device 30, 32.

The coupling device 28 may also include a microphone 29 to transmit a voice or other audio signal 17 back to the communication device 18. The coupling device 28 may contain one or several apertures to permit an acoustic wave to directly enter and drive the microphone 29. In certain embodiments, the coupling device 28 may be located, such as by clipping, proximate the face of a user so that the switch 58, microphone 29, and other controls located therein, may be easily accessed and used by a user. Likewise, the communication device 18 and audio device 16 may be located away from the user's face, clipped along a belt line, in a pocket, in a bag, or the like.

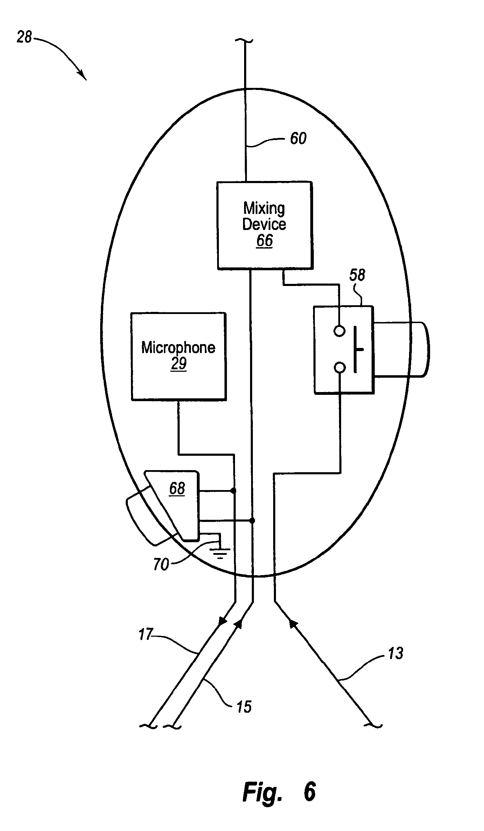

Referring to FIG. 6, in certain embodiments, the coupling device 28 may include a mixer 66 to mix the audio signals 13, 15 originating from the audio and communication devices 16,18. Thus, the audio signals 13, 15 may be heard simultaneously by a user through an acoustic device 30, 32. In certain instances, a ring or other sound may indicate a call is being received by the communication device 18 and may by audible over the sound of the music or other media through the acoustic device 30, 32. In this case, the audio signal 13 from the audio device 16 may be muted or disconnected by a user with a switch 58 while the user receives or places a call. Once the call is finished, the user may once again trigger the switch to begin listening to music or other audible media. Thus, a user may simultaneously hear and monitor both devices 16, 18 through a single acoustic device 30, 32 and may mute or disconnect at least one of the devices 16, 18 when needed.

In certain embodiments, the coupling device 28 may also include a switch 68 or other control device 68 to control features of the communication device 18, the audio device 16, or a combination thereof. For example, a switch 68 may connect inputs 17 or outputs 15 5 of the communication device 18 together, connect them to a ground 70, provide control signals to the device 18, or the like, to control features of the communication device 18. For example, a switch 68 or control device 68 may control features of the communication device 18 such as performing a mute command, a call connect command, a call disconnect command, voice-activated dialing, a command to call the last number dialed, or like features. The features activated may vary from device 18 to device 18 and may depend on the device engineering and configuration.

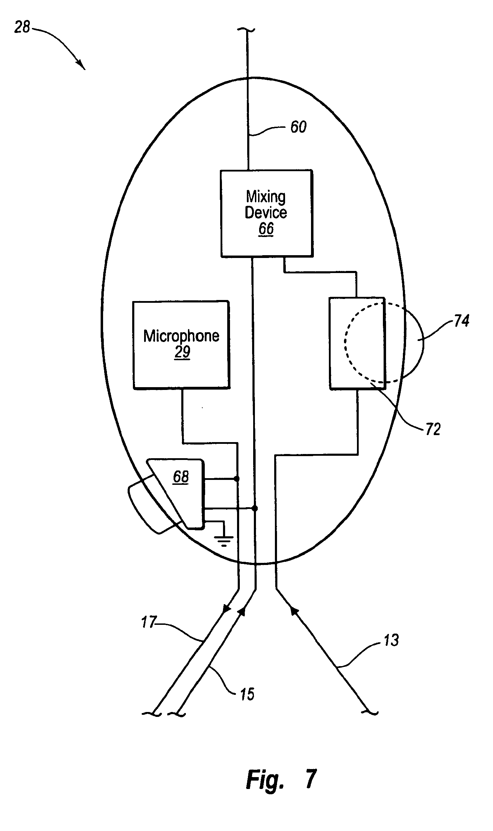

Referring to FIG. 7, in selected embodiments, the coupling device 28 may include a volume controller 72 to control the volume of at least one of the audio signals 13, 15 from the audio device 16 and the communication device 18. For example, as in the previous example, a mixer 66 may provide that audio signals 13, 15 be heard simultaneously by a user through an acoustic device 30, 32. When a call is received or placed on the communication device 18, a user may adjust the volume of the audio signal 13 using the volume controller 72. If desired, the user may adjust the volume such that music or audio material is still heard in the background while receiving or placing a call. Once a call is finished, a user may readjust the volume to a desired level. Thus, a user may simultaneously hear and monitor both devices through a single acoustic device 30, 32, and may adjust the volume of at least one of the devices 16, 18 when desired.

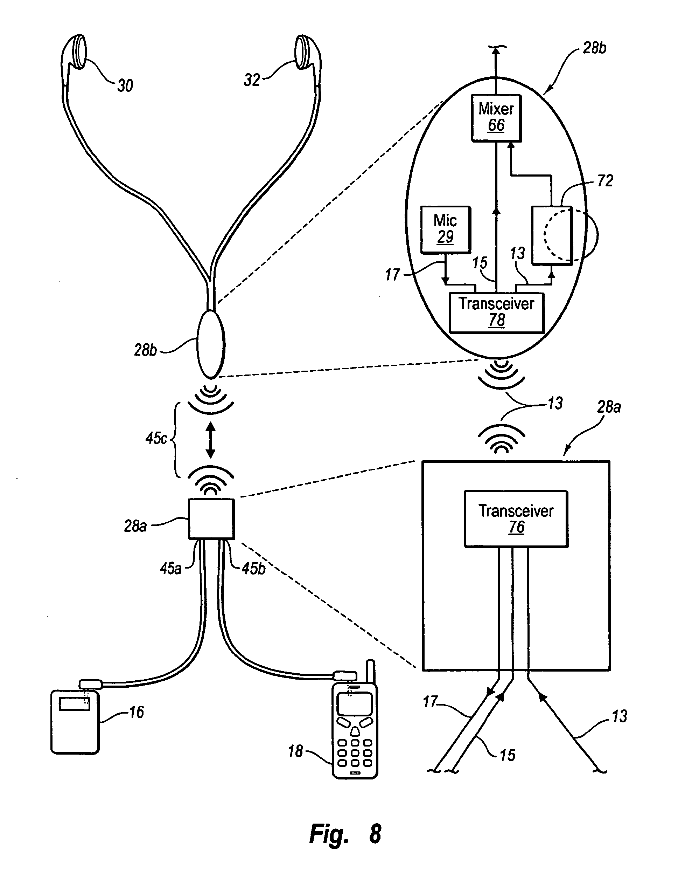

Referring to FIG. 8, in certain embodiments, a coupling device 28 may be divided into a pair of components 28a, 28b that wirelessly communicate with one another over one or more individual or combined interfaces 45c using a technology such as Bluetooth. For example, a first component 28a may include a transceiver 28a receptive to the signals 13, 15, 17 from the audio and communication devices 16, 18. The transceiver 76 may convert these signals to wirelessly transmittable frequencies 80 using an appropriate wireless protocol such that they may be transmitted to a peer transceiver 78. The transceiver 78 may then convert the frequencies 80 back to signals 13, 15, 17, where they may be processed by the coupling device 28b in accordance with a process like those described in FIGS. 5 through 7.

One of ordinary skill in the art will recognize that the wireless technology described in FIG. 8 may be used in a wide variety of different configurations and the example presented herein is not intended to limit the scope of the invention. For example, in certain embodiments, portions or all of the circuitry 29, 66, 72 or components 29, 66, 72 may be located in the housing 28a. In other embodiments, each of the devices 16, 18, may communicate wirelessly with the coupling device 28a at interfaces 45a and 45b.

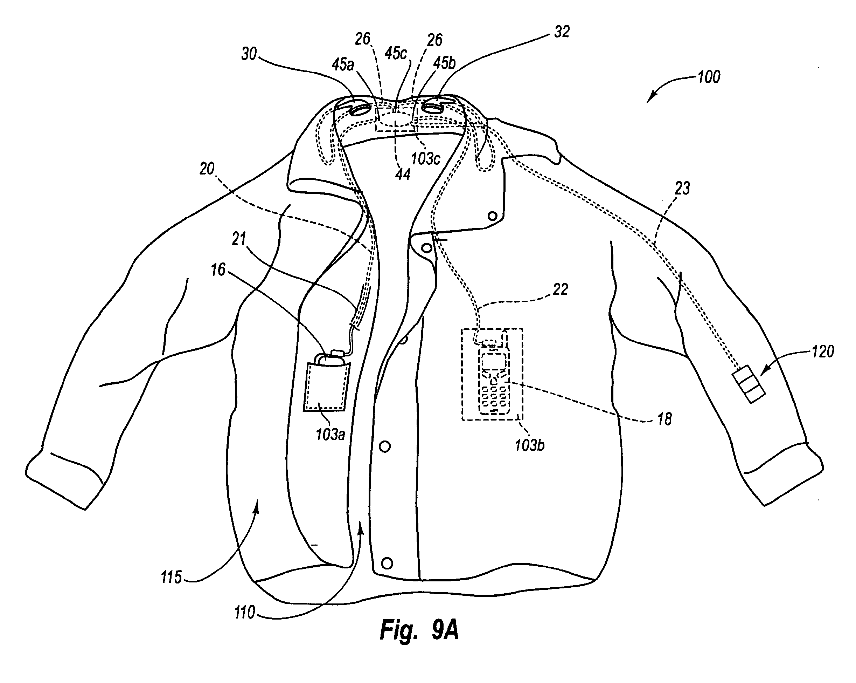

Still additional embodiments in accordance with the present invention relate to how the technology described herein can be used with, formed in, or otherwise removably coupled to various articles of manufacture for additional personal portability and convenience. For example, the device and technology described herein can be integrated seamlessly in an article of manufacture such as a jacket, coat, backpack, belt pack, helmet (or other head gear), shirt, pants, or the like. That is, the article (e.g., 100, 105, FIGs. 9A-9B) can be manufactured to include a number of internal or external pockets, receptacles, or channels for receiving various aspects of the device(s), wire(s), or control(s), such that the audio reception and transmission technology appears to be part of the article itself. The device can then be used with relative ease and comfort so that the user need not necessarily avoid use of the devices in difficult conditions, such as when skiing or biking, which could make the devices difficult to hold.

For example, as shown in FIGs. 9A - B, article 100, 105 has at least a first interface 45a of coupling device 44 for receiving communication from music player 16 (such as a portable MP3 player, tape player, CD player, or the like). This interface 45a can be a wired interface for receiving a stereo plug of any size, but can also be a wireless interface for receiving and/or transmitting wireless communication. In addition, article 100, 105 can include a second interface 45b for receiving a second audio signal from a substantially arbitrarily selectable two-way communication device 18. For example, FIGs. 9A - B show that coupling device 44 is communicably coupled to mobile phone 18 via wire 22. As with interface 45a, however, interface 45b can also be configured with primarily wireless communication means for communicating audio signals to and/or from device 18.

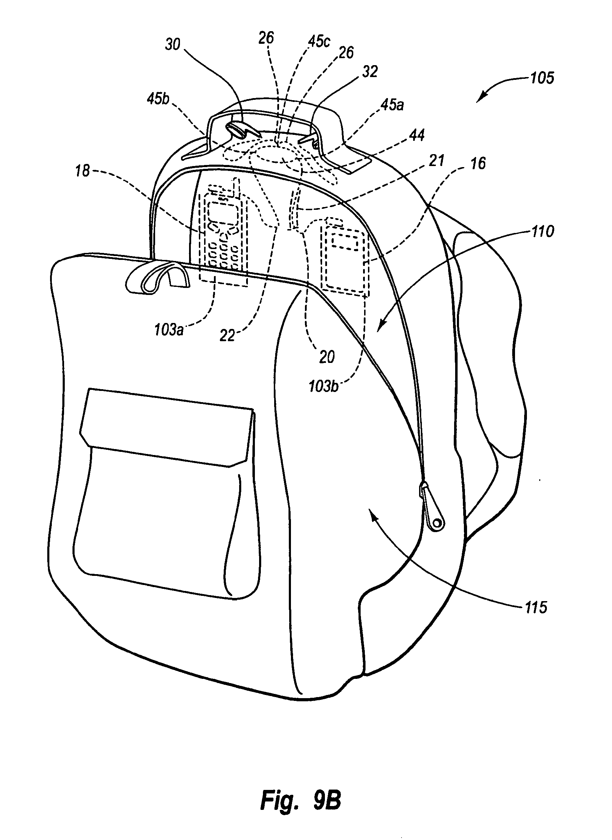

Article 100 can also include a third interface 45c for transmitting (and/or receiving) a third 60 audio signal comprising at least one of the first and second audio signals. For example, FIGs. 9A and 9B show that coupling device 44 receives audio signals from devices

16 and 18, and can send a third audio signal (one of the received first or second signals, or a combined first and second audio signal) through wires 26. As with interfaces 45a-b, third interface 45c can also send the third audio signal wirelessly, where appropriate, to corresponding acoustic devices.

In addition, article 100 can include acoustic device 30, 32, which can convert the audio signal from interface 45c into audible tones for article 100, 105 wearer. Acoustic device 30, 32 can be personal speakers that are inserted in (or built to surround) an ear, or can be larger speakers that are audible up to several feet away.

Additional embodiments of the invention can be shown or described in terms of inside and/or outside portions. For example, FIGs. 9A and 9B show that article 100, 105 includes a primarily inside portion 110 and a primarily outside portion 115. Inside portion 110, such as the inside of jacket 100 or backpack 115, further includes one or more receptacles (or pockets) 103a-b configured to receive an audio delivery device 16 and/or a two-way audio communication device 18. For example, pockets/receptacles 103a-b in Figures FIGs. 9A - 9B provide a secure resting place for audio delivery device 16 and mobile phone 18 within inside portion 110.

The article can also include a number of interfaces (not shown) 120 attached to the outside portion 115 for controlling any number of functions. The interfaces 120 can be communicably coupled to coupling device 44 via any number of wires (e.g., 23), or via wireless communication means. The interfaces 120 can provide direct communicative access to switch 58 and volume controller 72 inserted in a pocket (or sewn into) a sleeve, or directly coupled thereto. Switch 58 and volume controller 72 of interfaces 120 are, in turn, communicably connected to coupling device 28, 44, 54, via wire 23, so that the user can toggle between music selections, toggle between the music player or the mobile phone, control volume, or the like.

As shown, article 100 also include one or more wires 20, 22, 26, 34, 36 embedded (e.g., formed, prepared, or otherwise sewn) therein for communicating an audio signal 13, 15, 17, 60 from a first point to a second point. For example, jacket 100 or backpack 105 can be formed with one or more channels 21 for holding a wire that connects the audio delivery device to a coupling device 28, 44. Channels 21 can be a separate piece of fabric that is sewn to the inside portion 110 for the entire length of the corresponding wire. Alternatively, the one or more channels 21 can comprise holes, notches, or clips on in the inside portion 110 or outside portion 115, which can secure the one or more wires at specific points. In any event, there need not necessarily be a wire and corresponding channel 21 for each device, or for an entire length of wire, used with the article, particularly where some devices may communicate to a coupling device 28, 44, 54 via wireless communication.

In addition, still another embodiment in accordance with the present invention includes an article 100, 105 including a first pocket 103a having an audio delivery device 1 G inserted therein. Article 100, 105 also includes a second pocket 103b having a two-way communication device 18 inverted therein. Article 100, 105 still further includes a third pocket 103c for receiving an audio communication hub 28, 44, 54 which has one or more interfaces 45a-c for communicating with the audio delivery device and with the two-way communication device 18.

The audio communication hub 28, 44, 54 can be connected directly to each audio device via electrical wiring 20, 22, 26, 34, 36 embedded in the article 100, 105; or can be connected wirelessly via any number of wireless communication protocols. For example, as previously stated, article 100, 105 can include one or more channels 21 formed therein for receiving at least one communication wire 20, 22, 26, 34, 36. Alternatively, article 100 can be configured to provide electrical communication via wires only to the mobile phone 18 or to the audio delivery device 16, and be further configured communicate with a communication hub 28, 44 using Bluetooth, or another wireless communication protocol.

Accordingly, there are a number of ways in which a personal article can be configured to integrate multiple forms of audio communication, to thereby fuse various devices and protocols with wearable materials. In particular, in addition to jackets, backpacks, belt packs, or helmets, other articles that can integrate this technology include shirts, pants, shoes, eyewear, goggles, sunglasses, caps, or the like. Furthermore, as audio and switching devices become smaller and more lightweight, the options for incorporating the portable integration technology into other wearable items are essentially limitless.

The described embodiments are to be considered in all respects only as illustrative, and not restrictive. The scope of the invention is, therefore, indicated by the appended claims, rather than by the foregoing description. All changes within the meaning and range of equivalency of the claims are to be embraced within their scope.

## Claims

1. An integrated article of manufacture having one or more apparatus embedded therein for integrating a two-way communication device and an audio delivery device, comprising:
any of an article of clothing or a backpack configured to include:
a first interface (45a) for receiving a first audio signal from a substantially arbitrarily selectable audio delivery device (16);
a second interface (45b) for receiving a second audio signal from a substantially arbitrarily selectable two-way communication device (18);
a third interface (45c) for transmitting a third (60) audio signal comprising at least one of the first and second audio signals;
a coupling device (28) for sending or receiving at least two of the first, second or third audio signals wirelessly, the coupling device (28) further comprising a mixer (66) for producing the third audio signal from the first and second audio signals; and
an acoustic device (30, 32) for converting the third audio signal to an acoustic wave having an audio range corresponding to a hearing range of a user,
wherein:
the coupling device (28) is further divided into a pair of coupling components (28a, 28b) that wirelessly communicate with one another over the third interface (45c),
a first coupling component (28a) of the pair of coupling components includes the first interface (45a) and the second interface (45b) and a transceiver (76) receptive to the audio signals (13, 15) from the audio delivery device (16) and the two-way communication device (18) and
a second coupling component (28b) of the pair of coupling components includes a transceiver (78) which wirelessly communicates with the transceiver (76) of the first coupling component (28a) for passing one or more audio signals from the coupling device and any one or more of the audio delivery device, the two-way communication device, and the acoustic device, and
the second coupling component (28b) further contains at least one of a microphone (29) for transmitting a voice signal (17) to the two-way communication device, a switch (58) for selectively switching between the first and second audio signals to provide the third audio signal, the mixer (66) for mixing the first and second audio signals to create the third audio signal, and a volume controller (72) for selectively controlling the volume of at least one of the first and second audio signals.

2. The article as recited in claim 1, further comprising a first switch (58) within the coupling device (28) for selectively switching between the first and second audio signals to provide the third audio signal.

3. The article as recited in any of the preceding claims, further comprising a microphone (29) within the coupling device (28) for transmitting a voice signal (17) to the two-way communication device.

4. The article as recited in any of the preceding claims, further comprising a volume controller (72) for selectively controlling the volume of at least one of the first and second audio signals.

5. The article as recited in any of the preceding claims, further comprising: one or more transceivers (76, 78) for passing one or more audio signals from the coupling device and any one or more of the audio delivery device, the two-way communication device, and the acoustic device.

6. The article as recited in any of the preceding claims, further comprising the coupling device integrated therein, the coupling device containing the mixer (66) and at least one of a microphone (29), a switch (58), and a volume controller (72).

7. The article as recited in any of the preceding claims configured to receive a portable apparatus therein for integrating the two-way communication device and the audio delivery device, the article comprising:
an article having a primarily inside portion and a primarily outside portion, the inside portion including:
one or more receptacles configured to receive the audio delivery device (16) and the two-way audio communication device (18); and
one or more wires (20, 22, 26, 34, 36) embedded in the articles of manufacture for communicating an audio signal (13, 15, 17, 60) from a first point to a second point.

8. The articles as recited in claim 7, wherein the outside portion includes one or more surfaces for controlling at least one of audio device selection (58), volume control (72), and music selection.

9. The article as recited in claim 7 or claim 8, wherein the inside portion further includes one or more receptacles configured to receive a first transceivers (76) and a second transceiver (78), the first and second transceivers being configured to communicate wireless audio signals.

10. The article as recited in any of the claims 7 to 9, further comprising one or more speakers (30, 32) insetted into any of the inside portion or the outside portion, the one or more speakers configured to produce an audible sound in response to an audible signal received from any one or more of the audio delivery device or the two-way audio communication device.

11. The article as recited in any of the claims 7 to 10, wherein the article is one of a jacket, a backpack, or a belt pack.

12. The article as recited in any of the preceding claims configured for portable personal use to facilitate integrated communication using the two-way communication device and the audio delivery device, the article comprising:
one of a jacket, a personal carrier, or a headgear including:
a first pocket having the audio delivery device (16) inserted therein;
a second pocket having the two-way communication device (18) inserted therein;
a third pocket for receiving an audio communication hub (28, 44), the audio communication hub having the first interface (45a) to communicate with the audio delivery device, and the second interface (45b) to communicate with the two-way communication device; and
one or more channels (21) formed in the article of manufacture for receiving at least one communication wire (20, 22, 26, 34, 36), wherein the hub communicates the third audio signal and at least one of the first or second audio signals wirelessly.

13. The article as recited in claim 12, further comprising one or more acoustic devices (30, 32) attached thereto, the one or more acoustic devices configured to produce an audible sound in response to an audio signal passed from the audio communication hub.

14. The article as recited in claim 12, wherein the audio communication hub (44) is configured for wireless communication.

## Patentansprüche

1. Integrierter Produktionsartikel mit einem oder mehreren darin eingebetteten Geräten zum Integrieren einer Vorrichtung zur doppelt gerichteten Kommunikation und einer Tonabspielvorrichtung, welcher folgendes aufweist:
- ein beliebiges Kleidungsstück bzw. einen Rucksack, das bzw. der so ausgelegt ist, dass er folgendes umfasst:
- eine erste Schnittstelle (45a) zum Empfangen eines ersten Tonsignals von einer im Wesentlichen nach Gutdünken auswählbaren Tonabspielvorrichtung (16);
- eine zweite Schnittstelle (45b) zum Empfangen eines zweiten Tonsignals von einer im Wesentlichen nach Gutdünken auswählbaren Vorrichtung zur doppelt gerichteten Kommunikation (18);
- eine dritte Schnittstelle (45c) zum Übertragen eines dritten (60) Tonsignals, das mindestens ein Signal aus der Gruppe umfasst, die aus dem ersten und zweiten Tonsignal besteht;
- eine Kopplungsvorrichtung (28) zum drahtlosen Aussenden oder Empfangen von mindestens zwei Signalen aus der Gruppe, die aus dem ersten, zweiten und dritten Tonsignal besteht, wobei die Kopplungsvorrichtung (28) des Weiteren eine Mischstufe (66) zum Erzeugen des dritten Tonsignals aus dem ersten und zweiten Tonsignal aufweist; und
- eine Akustikvorrichtung (30, 32) zum Umwandeln des dritten Tonsignals in eine Schallwelle mit einem Tonbereich, welcher dem Hörbereich eines Benutzers entspricht,
bei welchem:
- die Kopplungsvorrichtung (28) außerdem in ein Paar Kopplungskomponenten (28a, 28b) unterteilt ist, welche drahtlos über die dritte Schnittstelle (45c) mit einander kommunizieren,
- eine erste Kopplungskomponente (28a) in dem Paar Kopplungskomponenten die erste Schnittstelle (45a) und die zweite Schnittstelle (45b) sowie eine Sender-Empfänger-Schaltung (76) umfasst, welche zum Empfangen der Tonsignale (13, 15) von der Tonabspielvorrichtung (16) und von der Vorrichtung zur doppelt gerichteten Kommunikation (18) ausgelegt ist, und
- eine zweite Kopplungskomponente (28b) in dem Paar Kopplungskomponenten eine Sender-Empfänger-Schaltung (78) umfasst, welche drahtlos mit der Sender-Empfänger-Schaltung (76) der ersten Kopplungskomponente kommuniziert, um ein oder mehr Tonsignale von der Kopplungsvorrichtung und einer oder mehreren Einheiten aus der Gruppe weiterzuleiten, welche die Tonabspielvorrichtung, die Vorrichtung zur doppelt gerichteten Kommunikation und die Akustikvorrichtung umfasst, und
- die zweite Kopplungskomponente (28b) des Weiteren mindestens ein Mikrofon (29) zum Übertragen eines Sprachsignals (17) zu der Vorrichtung zur doppelt gerichteten Kommunikation, und/oder einen Schalter (58) zum wahlweisen Umschalten zwischen dem ersten und zweiten Tonsignal zur Bildung des dritten Tonsignals, und/oder die Mischstufe (66) zum Mischen des ersten und des zweiten Tonsignals zur Bildung des dritten Tonsignals, sowie einen Lautstärkeregler (72) zum wahlweisen Steuern der Lautstärke von mindestens einem Signal aus der Gruppe, die das erste und das zweite Tonsignal umfasst, aufweist.

2. Produktionsartikel nach Anspruch 1, welcher des Weiteren einen ersten Schalter (58) innerhalb der Kopplungsvorrichtung (28) zum wahlweisen Umschalten zwischen dem ersten und dem zweiten Tonsignal zur Bildung des dritten Tonsignals aufweist.

3. Produktionsartikel nach einem der vorhergehenden Ansprüche, welcher des Weiteren ein Mikrofon (29) innerhalb der Kopplungsvorrichtung (28) zum Übertragen eines Sprachsignals (17) zu der Vorrichtung zur doppelt gerichteten Kommunikation aufweist.

4. Produktionsartikel nach einem der vorhergehenden Ansprüche, welcher des Weiteren eine Lautstärkeregelung (72) zum wahlweisen Steuern der Lautstärke von mindestens einem Signal aus der Gruppe aufweist, die das erste und das zweite Tonsignal umfasst.

5. Produktionsartikel nach einem der vorhergehenden Ansprüche, welcher des Weiteren eine oder mehrere Sender-Empfänger-Schaltungen (76, 78) zum Weiterleiten eines oder mehrerer Tonsignale von der Kopplungsvorrichtung und eines oder mehrerer Tonsignale von der Tonabspielvorrichtung, von der Vorrichtung zur doppelt gerichteten Kommunikation und der Akustikvorrichtung aufweist.

6. Produktionsartikel nach einem der vorhergehenden Ansprüche, welcher des Weiteren die darin integrierte Kopplungsvorrichtung aufweist, welche die Mischstufe (66) und mindestens ein Mikrofon (29) und/oder einen Schalter (58) und/oder eine Lautstärkeregelung umfasst.

7. Produktionsartikel nach einem der vorhergehenden Ansprüche, welcher zum Aufnehmen eines tragbaren Geräts darin ausgelegt ist, um die Vorrichtung zur doppelt gerichteten Kommunikation und die Tonabspielvorrichtung zu integrieren, wobei der Produktionsartikel folgendes aufweist:
einen Gegenstand mit einem in erster Linie innen liegenden Abschnitt und einem in erster Linie außen liegenden Abschnitt, wobei der innen liegende Abschnitt folgendes umfasst:
- einen oder mehrere Aufnahmeteile, die zum Aufnehmen der Tonabspielvorrichtung (16) und der Vorrichtung zur doppelt gerichteten Kommunikation (18) ausgelegt sind; und
- eine oder mehrere Drahtleitungen (20, 22, 26, 34, 36), die zur Übermittlung eines Tonsignals (13, 15, 17, 60) von einem ersten Punkt zu einem zweiten Punkt in dem Produktionsartikel eingebettet sind.

8. Produktionsartikel nach Anspruch 7, bei welchem der außen liegende Abschnitt eine oder mehrere Oberflächen zum Betätigen von mindestens einer der Einheiten zur Auswahl der Tonabspielvorrichtung (58), der Lautstärkeregelung (72) und der Musikauswahl umfasst.

9. Produktionsartikel nach Anspruch 7 oder Anspruch 8, bei welchem der innen liegende Abschnitt des Weiteren ein oder mehrere Aufnahmeteile aufweist, die zum Aufnehmen einer ersten Sender-Empfänger-Schaltung (76) und einer zweiten Sender-Empfänger-Schaltung (78) ausgelegt sind, wobei die erste und die zweite Sender-Empfänger-Schaltung zur drahtlosen Übertragung von Tonsignalen ausgelegt sind.

10. Produktionsartikel nach einem der Ansprüche 7 bis 9, welcher des Weiteren einen oder mehrere Lautsprecher (30,3 2) aufweist, welche in den innen liegenden Abschnitt oder den außen liegenden Abschnitt eingesetzt sind, wobei der eine oder die mehreren Lautsprecher so ausgelegt sind, dass sie ein hörbares Signal im Ansprechen auf ein akustisch wahrnehmbares Signal erzeugen, welches von einer oder beiden Einheiten , nämlich der Tonabspielvorrichtung oder der Vorrichtung zur doppelt gerichteten Kommunikation, empfangen wird.

11. Produktionsartikel nach einem der Ansprüche 7 bis 10, bei welchem der Produktionsartikel eine Jacke und/oder ein Rucksack und/oder eine am Gürtel zu tragende Einheit ist.

12. Produktionsartikel nach einem der vorhergehenden Ansprüche, welcher für den tragbaren persönlichen Einsatz zur Erleichterung der integrierten Kommunikation unter Verwendung der Vorrichtung zur doppelt gerichteten Kommunikation und der Tonabspielvorrichtung ausgelegt ist, wobei der Produktionsartikel folgendes aufweist:
eine Jacke, eine persönliche Tragvorrichtung oder eine Kopf-Sprechhörergarnitur, die folgendes umfassen:
- eine erste Tasche mit darin eingesetzter Tonabspielvorrichtung (16);
- eine zweite Tasche mit darin eingesetzter Vorrichtung zur doppelt gerichteten Kommunikation (18);
- eine dritte Tasche zur Aufnahme eines Netzknotenteils für die Tonkommunikation (28, 44), wobei das Netzknotenteil für die Tonkommunikation eine erste Schnittstelle (45a) zur Kommunikation mit der Tonabspielvorrichtung und eine zweite Schnittstelle (45b) zur Kommunikation mit der Vorrichtung zur doppelt gerichteten Kommunikation aufweist; und
- einen oder mehrere Kanäle (21), die in dem Produktionsartikel zur Aufnahme von mindestens einer Drahtleitung (20, 22, 26, 34, 36) ausgebildet sind, wobei das Netzknotenteil das dritte Tonsignal und mindestens das erste oder das zweite Tonsignal drahtlos überträgt.

13. Produktionsartikel nach Anspruch 12, welcher des Weiteren eine oder mehrere Akustikvorrichtungen (30, 32) aufweist, die daran angebracht sind, wobei die eine oder die mehreren Akustikvorrichtung(en) so ausgelegt ist bzw. sind, dass sie im Ansprechen auf ein Tonsignal, das von dem Netzknoten zur Tonkommunikation kommt, einen akustisch wahrnehmbaren Ton erzeugt bzw. erzeugen.

14. Produktionsartikel nach Anspruch 12, bei welchem das Netzknotenteil zur Tonkommunikation (44) für eine drahtlose Kommunikation ausgelegt ist.

## Revendications

1. Article de fabrication intégré ayant un ou plusieurs appareils noyés dans celui-ci pour intégrer un dispositif de communication à deux voies et un dispositif d'émission audio, comprenant:
l'un quelconque parmi un article de vêtement ou d'un sac à dos configuré pour comporter:
une première interface (45a) pour recevoir un premier signal audio d'un dispositif d'émission audio (16) pouvant être sélectionné sensiblement arbitrairement;
une deuxième interface (45b) pour recevoir un deuxième signal audio d'un dispositif de communication à deux voies (18) pouvant être sélectionné sensiblement arbitrairement;
une troisième interface (45c) pour transmettre un troisième signal audio (60) comprenant au moins un des premier et deuxième signaux audio;
un dispositif de couplage (28) pour émettre ou recevoir au moins deux des premier, deuxième ou troisième signaux audio sans fil, le dispositif de couplage (28) comprenant en outre un mélangeur (66) pour produire le troisième signal audio à partir des premier et deuxième signaux audio; et
un dispositif acoustique (30, 32) pour convertir le troisième signal audio en une onde acoustique ayant une plage audio correspondant à une plage d'écoute d'un utilisateur, dans lequel:
le dispositif de couplage (28) est divisé en outre en une paire de composants de couplage (28a, 28b) qui communiquent sans fil l'un avec l'autre par la troisième interface (45c),
un premier composant de couplage (28a) de la paire de composants de couplage comporte la première interface (45a) et la deuxième interface (45b) et un émetteur-récepteur (76) réceptif aux signaux audio (13, 15) du dispositif de délivrance audio (16) et du dispositif de communication à deux voies (18), et
un deuxième composant de couplage (28b) de la paire de composants de couplage comporte un émetteur-récepteur (78) qui communique sans fil avec l'émetteur-récepteur (76) du premier composant de couplage (28a) pour faire passer un ou plusieurs signaux audio du dispositif de couplage et l'un quelconque ou plusieurs du dispositif de délivrance audio, du dispositif de communication à deux voies et du dispositif acoustique, et
le deuxième composant de couplage (28b) contient en outre au moins un d'un microphone (29) pour transmettre un signal vocal (17) au dispositif de communication à deux voies, un commutateur (58) pour commuter sélectivement entre les premier et deuxième signaux audio pour réaliser le troisième signal audio, le mélangeur (66) pour mélanger les premier et deuxième signaux audio pour créer le troisième signal audio et un dispositif de commande de volume (72) pour commander sélectivement le volume d'au moins un parmi les premier et deuxième signaux audio.

2. Article selon la revendication 1, comprenant en outre un premier commutateur (58) dans le dispositif de couplage (28) pour commuter sélectivement entre les premier et deuxième signaux audio pour réaliser le troisième signal audio.

3. Article selon l'une quelconque des revendications précédentes, comprenant en outre un microphone (29) dans le dispositif de couplage (28) pour transmettre un signal vocal (17) au dispositif de communication à deux voies.

4. Article selon l'une quelconque des revendications précédentes, comprenant en outre un dispositif de commande de volume (72) pour commander sélectivement le volume d'au moins un des premier et deuxième signaux audio.

5. Article selon l'une quelconque des revendications précédentes, comprenant en outre un ou plusieurs émetteurs-récepteurs (76, 78) pour faire passer un ou plusieurs signaux audio du dispositif de couplage et un quelconque ou plusieurs parmi le dispositif de délivrance audio, le dispositif de communication à deux voies et le dispositif acoustique.

6. Article selon l'une quelconque des revendications précédentes, comprenant en outre le dispositif de couplage intégré dans celui-ci, le dispositif de couplage contenant le mélangeur (66) et au moins un d'un microphone (29), d'un commutateur (58) et d'un dispositif de commande de volume (72).

7. Article selon l'une quelconque des revendications précédentes, configuré pour recevoir un appareil portable dans celui-ci pour intégrer le dispositif de communication à deux voies et le dispositif de délivrance audio, l'article comprenant:
un article ayant une portion essentiellement intérieure et une portion essentiellement extérieure, la portion intérieure comportant:
un ou plusieurs réceptacles configurés pour recevoir le dispositif de délivrance audio (16) et le dispositif de communication audio à deux voies (18); et
un ou plusieurs fils (20, 22, 26, 34, 36) noyés dans l'article de fabrication pour la communication d'un signal audio (13, 15, 17, 60) d'un premier point à un deuxième point.

8. Article selon la revendication 7, dans lequel la portion extérieure comporte une ou plusieurs surfaces pour commander au moins une parmi la sélection du dispositif audio (58), la commande de volume (72) et la sélection de musique.

9. Article selon la revendication 7 ou la revendication 8, dans lequel la portion intérieure comporte en outre un ou plusieurs réceptacles configurés pour recevoir un premier émetteur-récepteur (76) et un deuxième émetteur-récepteur (78), les premier et deuxième émetteurs-récepteurs étant configurés pour communiquer sans fil des signaux audio.

10. Article selon l'une quelconque des revendications 7 à 9, comprenant en outre un ou plusieurs haut-parleurs (30, 32) insérés dans l'une quelconque parmi la portion intérieure ou la portion extérieure, un ou plusieurs haut-parleurs précités étant configurés pour produire un son audible en réponse à un signal audible reçu d'un quelconque ou de plusieurs des dispositifs de délivrance audio ou du dispositif de communication audio à deux voies.

11. Article selon l'une quelconque des revendications 7 à 10, où l'article est un parmi une veste, un sac à dos ou une pochette portée à la ceinture.

12. Article selon l'une quelconque des revendications précédentes, configuré pour une utilisation personnelle portable pour faciliter une communication intégrée en utilisant le dispositif de communication à deux voies et le dispositif de délivrance audio, l'article comprenant:
un parmi une veste, un sac personnel ou un chapeau comportant:
une première poche ayant le dispositif de délivrance audio (16) inséré dans celle-ci; une deuxième poche ayant le dispositif de communication à deux voies (18) inséré dans celle-ci; une troisième poche pour recevoir un moyeu de communication audio (28, 44), le moyeu de communication audio ayant la première interface (45a) pour communiquer avec le dispositif de délivrance audio, et la deuxième interface (45b) pour communiquer avec le dispositif de communication à deux voies; et
un ou plusieurs canaux (21) formés dans l'article de fabrication pour recevoir au moins un fil de communication (20, 22, 26, 34, 36), où le moyeu communique le troisième signal audio et au moins un des premier ou deuxième signaux audio sans fil.

13. Article selon la revendication 12, comprenant en outre un ou plusieurs dispositifs acoustiques (30, 32) fixés à celui-ci, un ou plusieurs dispositifs acoustiques précités étant configurés pour produire un son audible en réponse à un signal audio venant du moyeu de communication audio.

14. Article selon la revendication 12, dans lequel le moyeu de communication audio (44) est configuré pour une communication sans fil.
